# EUROPÄISCHE PATENTSCHRIFT

(11) **EP 3 263 402 B1**
(45) Veröffentlichungstag und Bekanntmachung des Hinweises auf die Patenterteilung: **10.04.2019**
(21) Anmeldenummer: 17174594.6
(22) Anmeldetag: 06.06.2017
(51) Int. Cl.: B60P 3/12, B60P 3/14

(54) **Behälter zum Bergen havarierter Fahrzeuge und Verfahren zum Bergen eines havarierten Fahrzeugs**
Container for salvaging damaged vehicles and method for salvaging a damaged vehicle
Récipient de récupération de véhicules en perdition et procédé de récupération d'un véhicule en perdition

(30) Priorität: 30.06.2016 DE 102016211854
(43) Veröffentlichungstag der Anmeldung: 03.01.2018
(73) Patentinhaber: Ellermann Eurocon GmbH, 27751 Delmenhorst (DE)
(72) Erfinder: Ellermann, Wenzeslaus, 27755 Delmenhorst (DE)
(74) Vertreter: Eisenführ Speiser

(56) Entgegenhaltungen:
- WO-A1-2006/014453
- AU-A4- 2009 101 088
- DE-A1- 2 844 174
- US-A1- 2014 119 864

## Beschreibung

Die Erfindung bezieht sich auf einen Behälter, insbesondere Abrollbehälter, Absetzbehälter oder ISO-Container, zum Bergen havarierter Fahrzeuge, insbesondere havarierter Elektrofahrzeuge. Des Weiteren bezieht sich die Erfindung auch auf ein Verfahren zum Bergen eines havarierten Fahrzeuges. US 2014/119864 A1 und DE 28 44 174 A1 offenbaren Anhänger die auch ein Fahrzeug behalten können.

Es ist allgemein bekannt, dass Elektrofahrzeuge Akkumulatoren aufweisen, die bei einer Havarie in Brand geraten können. Es besteht dann die Besonderheit, dass der Akkumulator bereits nach wenigen Minuten oberhalb einer kritischen Zündtemperatur von ungefähr 800 Grad Celsius beginnt, eigenständig abzubrennen. Dabei nährt der abbrennende Akkumulator selbständig den Brand. Aufgrund der hohen Wärmeentwicklung während eines solchen Brandes gestaltet sich die Bergung und Löschung als äußerst schwierig. Das Löschen unter Verwendung von Löschwasser ist dabei grundsätzlich möglich. Jedoch wird eine große Menge Löschwasser benötigt, da nicht nur der Brand selbst zu löschen ist, sondern darüber hinaus ist auch der Akkumulator soweit herunter zu kühlen ist, dass dieser eine Temperatur unterhalb der kritischen Zündtemperatur hat.

Im Stand der Technik, wie beispielsweise aus der Presseinformation der DEKRA "Lithium-Ionen-Batterien stellen in Brandversuchen Sicherheit unter Beweis"; Stuttgart, 29.10.2012 / Nr. 142 ausgeführt, werden dem verwendeten Löschwasser Zusätze beigemischt, welche die Fließeigenschaften des Löschwassers verändern und/oder deren Kühlwirkung erhöhen. Beispielsweise haben solche modifizierten Löschmittel eine gelartige Konsistenz, sodass dieses nur langsam abfließen kann und hierdurch mehr Wärmeenergie vom Fahrzeug aufnimmt. Das gelartige Löschmittel haftet vermehrt auf dem brennenden Stoff, wodurch dessen Kühlwirkung erhöht ist.

Ein weiterer Nachteil, der aus dem Stand der Technik abgeleitet wird, ist die Kontamination des Löschmittels. Das Löschmittel wird einerseits durch die aus dem havarierten Fahrzeug austretenden Stoffe, insbesondere Fluide, hervorgerufen. Hierzu zählen die klassischen Betriebsmittel des Fahrzeugs, aber auch der Inhalt des Akkumulators selbst, sowie im Zuge der Verbrennung entstehende thermische Zersetzungsprodukte, die hoch toxisch sein können. Zum anderen stellt, je nach verwendetem Zusatz, das Löschmittel selbst eine Umweltgefahr dar. Sowohl der Bodenreich unterhalb des havarierten Fahrzeugs als auch Fahrzeuginsassen und Bergungs- bzw. Löschkräfte erleiden potentiell schwere Gesundheitsschäden, wenn sie dieser Kontamination ausgesetzt werden.

Jenseits von havarierten Elektrofahrzeugen besteht auch bei konventionellen Fahrzeugen (mit Verbrennungsmotor) das Problem, dass infolge einer aufgetretenen Havarie Gefahrstoffe austreten können, oder bei Brandgefahr hohe Risiken für Umwelt und umstehende Personen bestehen. Auch bei konventionellen Fahrzeugen ist die Vermeidung von Gesundheits- und Sicherheitsrisiken bei der Bergung und Löschung ein immer wieder auftretendes Problem.

Der vorliegenden Erfindung lag somit die Aufgabe zugrunde, eine Möglichkeit zum Bergen und/oder Löschen havarierter Fahrzeuge aufzuzeigen, die die vorstehend bezeichneten Nachteile möglichst weitgehend überwindet. Insbesondere lag der Erfindung die Aufgabe zugrunde, Vorrichtungen und Verfahren anzugeben, die ein sicheres Bergen, und/oder Löschen, havarierter Fahrzeuge ermöglichen, und dabei eine möglichst hohe Arbeitssicherheit, und insbesondere Vermeidung von Kontaminationen ermöglichen.

Die Erfindung löst die ihr zugrundeliegende Aufgabe bei einem Behälter zum Bergen havarierter Fahrzeuge, insbesondere havarierter Elektrofahrzeuge, mit den Merkmalen nach Anspruch 1. Insbesondere sind an dem Behälter ein Behälterboden und mehrere Seitenwände vorgesehen, die einen Aufnahmebereich für das Fahrzeug definieren. Zudem weist der Behälter eine verschließbare Öffnung zum Überführen des Fahrzeugs in den oder aus dem Aufnahmebereich, eine am Behälter angeordnete Winde, insbesondere Seilwinde, zum Verbringen des Fahrzeugs in den Behälter und eine Anzahl von Anschlüssen zum Einleiten und/oder Abführen von Kühl- bzw. Löschmittel in den oder aus dem Aufnahmebereich auf.

Die Erfindung macht sich hierbei die Erkenntnis zu Nutze, dass durch die Verwendung eines Behälters, wie beispielsweise eines Abrollbehälters, Absetzbehälters oder Iso-Containers, mit einem zumindest bereichsweise geschlossenen Aufnahmebereich ein Aufnahmeraum für das insbesondere brennende Elektrofahrzeug ausgebildet ist, der auf einfache Weise mit Wasser als Löschmittel befüllt werden kann, wobei das Löschmittel nicht so ohne Weiteres abfließt. In dem Aufnahmebereich des Behälters kann das havarierte Fahrzeug mitsamt aller Brandquellen, insbesondere seinem Akkumulator, gezielt so lange mit dem Kühl- bzw. Löschmittel in Kontakt gebracht werden, bis ein Selbstentzünden nicht mehr möglich ist. Vorzugsweise wird als Kühl- bzw. Löschmittel Löschwasser verwendet. Mittels der Winde, welche bevorzugt als Seilwinde ausgebildet ist, wird das havarierte Fahrzeug über die vorzugsweise abdichtend verschließbare Öffnung am Behälter einfach in den Aufnahmebereich hinein gezogen. Die Höhe der Seitenwände und des die Öffnung am Behälter verschließenden Konstruktionsteiles ist so gewählt, dass innerhalb des Aufnahmebereichs ein Füllstand möglich ist, mit dem ein brennender Fahrzeugakkumulator ausreichend mit dem Kühl- bzw. Löschmittel in Kontakt gebracht werden kann. Ferner ist mit dem Ausbilden eines geschlossenen Aufnahmeraumes das unkontrollierte Abfließen von bereits mit dem brennenden Gegenstand in Kontakt gelangtem Löschmittel, das dann beispielsweise mit schädlichen bzw. giftigen Schadstoffen kontaminiert sein kann, in die Umwelt vermieden. Das mit Schadstoffen durchsetzte bzw. beladene Kühl- bzw. Löschmittel verbleibt sicher im Aufnahmebereich des Behälters, bis es kontrolliert abgeführt wird, beispielsweise in einen Gefahrgutbehälter abgepumpt wird. Unter einem Behälter sind im Rahmen der Erfindung kranbare Behälter zu verstehen, wie beispielsweise Abrollbehälter, Absetzbehälter oder Iso-Container, die mit Hilfe einer Kraneinrichtung, welche vorzugsweise an einem Fahrzeug angeordnet ist, von dessen Ladefläche abgesetzt werden können oder auf die Ladefläche herauf bewegbar sind. Je nach Behältertyp sind hierzu korrespondierende Greifmittel an Kraneinrichtung und Behälter ausgebildet.

Ein Vorteil der Erfindung liegt auch darin, dass der über die Anschlüsse befüllbare Behälter als Vorratsbehälter für ein Löschmittel, wie zum Beispiel Löschwasser verwendet werden kann. Ein solcher Vorratsbehälter dient beispielsweise als Befüllstation für ein bei Helikopter-Löscheinsätzen zu befüllendes Löschmittelbehältnis, das dann vom Helikopter zum Brandherd geflogen und darüber entleert wird. Der Vorratsbehälter kann an eine zum Wiederbefüllen des Löschmittelbehältnisses günstige, vom Helikopter leichter anfliegbare Stelle verbracht werden. Hierdurch wird die Löscheffizienz verbessert.

In einer bevorzugten Weiterbildung der Erfindung ist die Winde im Aufnahmebereich des Behälters und zum Behälterboden in einem Abstand von wenigstens 1,2 Metern angeordnet. Darüber ist sichergestellt, dass im Aufnahmebereich des Behälters ein ausreichend hoher Füllstand des Kühl- bzw. Löschmittels zum Löschen bzw. Kühlen des havarierten Fahrzeuges erreicht werden kann, ohne ungewollt die Winde zu beschädigen. Die zum Einsatz kommende Winde weist zum Schutz ihrer elektrischen Bauteile eine Schutzart von mindestens IP56 (gemäß DIN EN 60529) oder höher auf. Bevorzugt weist die Winde eine Schutzart von mindestens IP 68 auf, sodass die Winde staubdicht und wasserdicht ist. In einer Ausgestaltung der Erfindung ist die Winde an der Innenseite der Seitenwand 6 des Behälters angeordnet, welche gegenüberliegend zur Öffnung am Behälter angeordnet ist. Vorzugsweise ist die Winde in Breitenrichtung der Seitenwand 6, also parallel zum Behälterboden, verschiebbar aufgenommen.

Vorzugsweise ist auf einer Höhe zwischen der Winde und dem Behälterboden eine Umlenkung, insbesondere Umlenkrolle, beispielsweise für ein Zugmittel der Winde angeordnet, wodurch das havarierte Fahrzeug im Wesentlichen parallel zur Aufstellfläche für den Behälter selbst gezogen werden kann. Die Umlenkrolle weist dabei vorzugsweise ein Breitenmaß auf, welches wenigstens dem Verschiebeweg der Winde entspricht. In einer Ausführungsform ist die Umlenkrolle auf einer Höhe von etwa 0,5 m über dem Behälterboden des Behälters angeordnet. Das über die Umlenkrolle geführte Zugmittel der Winde ist vorzugsweise ein kunststoffummanteltes Zugseil, beispielsweise mit einem Durchmesser von 1 cm oder mehr, an dessen freiem Ende ein Hakenteil zum Fassen des havarierten Fahrzeugs angeordnet ist. Bevorzugt ist auf der dem Aufnahmebereich zugewandten Seite der Seitenwand 6, an der die Winde und die Umlenkung aufgenommen sind, ein Anfahrschutz vorgesehen, mit dem ein Kontakt des in den Aufnahmebereich gezogenen havarierten Fahrzeuges mit der aus Winde und zumindest Umlenkrolle ausgebildeten Zugeinrichtung verhindert wird.

Eine bevorzugte Weiterbildung der Erfindung sieht vor, dass mit dem Ende eines Zugmittels (41) der Winde (38), insbesondere dem Ende des Windenseiles, ein Zurrgurt (37) gekoppelt ist, der vorzugweise in seiner Länge verstellbar ist, und der dazu angepasst ist, um das havarierte Fahrzeug (7) herum geführt zu werden.

Mit dem Zurrgurt, der um das havarierte Fahrzeug herum gelegt wird, wird bevorzugt eine das Fahrzeug aufnehmende bzw. umschließende Schlaufe ausgebildet. Der Zurrgurt ist vorzugsweise dazu angepasst, mittig in Längsrichtung unter dem Fahrzeug hindurchgerollt und einmal um das havarierte Fahrzeug herum gelegt zu werden. Der Zurrgurt weist vorzugsweise einen Verbindungsabschnitt zum Einhängen des Endes des Zugmittels der Winde auf, worüber ein vereinfachtes Verbringen des havarierten Fahrzeuges in den Aufnahmebereich des Behälters gewährleistet ist. Der Zurrgurt weist vorzugsweise eine Breite von 30 cm oder mehr, besonders bevorzugt 60 cm oder mehr auf. Weiter vorzugsweise weist der Zurrgurt eine Länge von 12 m oder mehr, ungefähr 15 m oder mehr auf. An einem Ende des Gurtes ist ein Kopplungsmittel, vorzugsweise eine Öse, als Verbindungsabschnitt für das Ende des Windenseiles angeordnet. Für eine Größenverstellung der Schlaufe, so dass die Größe der zu bildenden Schlaufe an die Fahrzeugabmessungen angepasst werden kann, weist vorzugsweise der Zurrgurt an einem Ende zwei Hakenteile auf, welche mit am gegenüberliegenden Ende des Zurrgurtes in unterschiedlichen Abständen entlang des Zurrgurtes angeordneten Einhakösen reversibel lösbar koppelbar sind.

Vorzugsweise ist ein sich gegenüber dem Behälterboden entlang zumindest eines Abschnitts der Seitenwände erstreckendes Dach vorgesehen. In einer Ausführungsform ist das Dach ein festes Dach, welches im Stirnwandbereich des Abrollcontainers angeordnet ist. Das Dach dient vornehmlich zum Schutz der darunter angeordneten Winde, welche an der Innenseite der als Stirnwand ausgebildeten Seitenwand gehalten wird. Bevorzugt erstreckt sich das feste Dach entlang der Stirnwand zwischen den beiden parallel zueinander verlaufenden Seitenwänden des Abrollcontainers. In Längsrichtung, also parallel zur Erstreckungsrichtung der Seitenwände, erstreckt sich das feste Dach über einen Abschnitt von ungefähr 650 Millimetern. Vorzugsweise weist das feste Dach einen Windendeckel auf, über den die Zugänglichkeit zu der darunter angeordneten Winde gewährleistet wird.

In einer alternativen Ausgestaltung ist das Dach als Schiebedach, vorzugsweise als Faltdach, ausgebildet, mit Hilfe dem die bevorzugt offene Oberseite des Behälters im Bedarfsfall verschlossen werden kann. Insbesondere bei Havarien, bei denen es zu einer starken Rauchentwicklung kommt, kann bei geschlossenem Schiebedach der Austritt von Rauchgasen aus dem Aufnahmebereich deutlich vermindert werden. Vorzugsweise weist das Schiebedach ein feuerwiderstandsfähiges Gewebe als Planenmaterial für das Faltdach auf. In einer bevorzugten Ausführungsform werden als Planenmaterial für das Faltdach Schweißschutzdecken verwendet. Schweißschutzdecken sind textile Flächengebilde aus vorzugsweise E-Glas und Silikatgeweben mit einer Temperaturbeständigkeit von bis zu 1600°C und bevorzugt nach DIN 4102 nicht brennbar ausgeführt.

Vorzugsweise ist der Öffnung am Behälter eine Klappe zugeordnet, welche um eine waagerechte Schwenkachse am Behälter schwenkbar gelagert ist. Die um eine horizontale Achse schwenkbar angelenkte Klappe bildet in ihrer Offenstellung eine Art Rampe bzw. schiefe Ebene am Öffnungsbereich des Abrollbehälters für das in den Aufnahmebereich zu verbringende Fahrzeug. Die schwenkbar aufgenommene Klappenkante der die Öffnung abdichtend verschließbaren Klappe ist vorzugsweise auf einer Ebene zum Behälterboden ausgerichtet. Dadurch ist ein bevorzugt absatzfreier Übergang zwischen der Klappe und dem Behälterboden bewirkt. In einer Ausführungsform ist an der schwenkbaren Klappe eine Spaltabdeckung, in Form eines Spalt-Abdeckbleches, zwischen Klappe und Behälterboden vorgesehen, was das Verbringen des havarierten Fahrzeugs in den Aufnahmebereich des Behälters weiter vereinfacht. Das Spalt-Abdeckblech ist vorzugsweise schwenkbar an der Klappe angeordnet, wobei weiter vorzugsweise die Schwenkachse in einem Abstand zur Kante der Klappe angeordnet ist. Das Spalt-Abdeckblech ist vorzugsweise quer zu seiner Erstreckungsrichtung, also in Überfahrrichtung, gebogen ausgebildet. In einer weiteren Ausführungsform weist die schwenkbare Klappe Verstärkungen auf, welche die Festigkeit der Klappe erhöhen, die einem Verbiegen der Klappe während des Überfahrens durch das Fahrzeug entgegenwirken. Zur sicheren Abdichtung in der Schließstellung der Klappe zwischen Klappe und Behälter, weist der Behälter im Bereich seiner Öffnung ein mit der Klappe zusammenwirkendes Dichtelement auf, insbesondere eine Hohl-Profildichtung.

Gemäß einer anderen Weiterbildung des erfindungsgemäßen Behälters weist die Klappe mehrere aus der Klappenebene vorstehende Halteteile auf, welche die Seitenwände zu beiden Seiten der Öffnung außenseitig umgreifen. Die bevorzugt an den seitlichen Außenkanten und an der Innenseite der Klappe vorstehenden Halteteile verhindern in der Schließstellung der Klappe, dass die Seitenwände bei mit Löschwasser gefüllten Aufnahmebereich, aufgrund des dann wirkenden Fluiddrucks, nach außen ausweichen, wodurch die Dichtwirkung zwischen der Klappe und den Seitenwänden aufgehoben würde. Vorzugsweise weist die Klappe entlang der seitlichen Außenkanten jeweils mindestens ein, bevorzugt zwei, Halteteile auf, welche, vorzugsweise in unterschiedlichen Abständen zur Schwenkachse, an der Klappe angeordnet sind. Zusätzlich sind im Bereich der Öffnung am Behälter Verriegelungen in Form eines Verriegelungshakens und/oder eines Spannverschlusses an den Seitenwänden angeordnet bzw. ausgebildet. Die Verriegelungen ziehen die Klappe insbesondere in Schließstellung in Richtung der Seitenwände und erhöhen bevorzugt die Dichtwirkung.

In einer anderen Ausgestaltung der Erfindung sind am Behälter eine oder mehrere Schließhilfen für die schwenkbare Klappe angeordnet, welche vorzugsweise einen über Zugseile an der Klappe angreifenden Federmechanismus aufweisen. Mithilfe der Schließhilfen zu beiden Seiten einer Seitenwand kann die schwenkbar am Behälter aufgenommene Klappe mit geringem Kraftaufwand von Hand aus ihrer Offenstellung in ihre Schließstellung überführt werden. Die Schließhilfen sind dazu eingerichtet, dass die Klappe jeweils in ihren Endlagen, also in der Offenstellung und ihrer Schließstellung, verbleibt oder gehalten wird. Jede Schließhilfe weist bevorzugt einen Federmechanismus mit einer Feder auf, wobei die Federn entlang der Außenseite der Seitenwände in waagerechter Ausrichtung verlaufen. Ein Ende der Feder ist an der Seitenwand fixiert und das gegenüberliegende Ende der Feder ist über ein Zugseil mit einem Seitenbereich der schwenkbaren Klappe gekoppelt. Vorzugsweise ist das Zugseil über eine Umlenkung geführt, wobei das eine Ende des Zugseiles in einem Abstand zur angelenkten Klappenkante von etwa einem Siebtel bis einem Viertel der Gesamthöhe der Gesamthöhe der Klappe an einen Seitenbereich der Klappe angreift. Darüber ist eine gezielte Beschränkung des Federweges an der Feder der Schließhilfe bewirkt, welcher etwa 300 Millimeter beträgt.

In einem weiteren Ausführungsbeispiel der Erfindung ist der Öffnung des Behälters eine Leiteinrichtung für das in den Aufnahmebereich zu überführende Fahrzeug zugeordnet, welche vorzugsweise zwei seitliche Leitbleche oder Leitplanken aufweist, die besonders bevorzugt dazu angepasst sind, ausgehend von der Öffnung des Behälters einen Öffnungswinkel aufzuspannen. Mit der Leiteinrichtung wird das Überführen des havarierten Fahrzeugs in den Aufnahmebereich, insbesondere bei eingeschlagenen Vorderrädern oder starker Deformation des Fahrzeugs, vereinfacht. Die Leiteinrichtung mit ihren Leitblechen oder Leitplanken, welche in aufgespanntem Zustand jeweils schräg zur Längsache des Behälters verlaufen, vorzugsweise in einem Winkelbereich von etwa 15° bis ungefähr 60°, bildet eine Trichterfunktion ab. Die Leitbleche oder Leitplanken werden nach dem Absetzen des Behälters und vorzugsweise dem Zugänglichmachen des Aufnahmebereiches beispielsweise in Aufnahmen an insbesondere den Seitenwänden des Behälters eingesteckt und sind in ihrer Ausrichtung zur Öffnung des Behälters fixierbar. In einer alternativen Ausführungsform sind die Leitbleche oder Leitplanken im Endbereich der die Öffnung begrenzenden Seitenwände schwenkbeweglich, bevorzugt an deren Innenseiten, angeordnet.

Gemäß einer bevorzugten Weiterbildung ist wenigstens eine Einrichtung zur Ladungssicherung des havarierten Fahrzeuges im Aufnahmebereich des Behälters vorgesehen. Mit der Einrichtung zur Ladungssicherung kann das geborgene Fahrzeug, gegebenenfalls nachdem ein Brand gelöscht wurde, im Aufnahmebereich des Behälters gesichert werden. Dies erhöht die Sicherheit insbesondere dann, wenn der Behälter zusammen mit dem Fahrzeug abtransportiert werden soll. In Abhängigkeit des zum Einsatz kommenden kranbaren Behälters verbleibt in einer Ausführungsform der Erfindung auch das Löschmittel während des Abtransports im Behälter.

Vorzugsweise weist die Einrichtung zur Ladungssicherung wenigstens ein quer zur Längsachse des Behälters spannbares Spannmittel, vorzugsweise einen Spanngurt, und eine mit dem Spannmittel korrespondiere Spanneinrichtung auf, insbesondere einen Ratschenspanner. Das Spannmittel ist mit einem Ende längenveränderlich an der Spanneinrichtung aufwickelbar aufgenommen. Das freie Ende des Spannmittels kann vorzugsweise über einen endseitig befestigten Haken mit einem als Zurröse ausgebildeten Laschpunkt, der beabstandet zur Spanneinrichtung am Behälter angeordnet ist, in Eingriff gebracht werden. Vorzugsweise weist die Einrichtung zur Ladungssicherung mehrere Spanneinrichtungen mit Spanngurten auf, welche an einer Seitenwand in Längsrichtung des Behälters im Abstand zueinander angeordnet sind. Die als Zurrösen ausgebildeten Laschpunkte sind an der Innenseite der gegenüberliegend angeordneten Seitenwand angeordnet. Das Spannmittel ist vorzugsweise in vertikaler Richtung über ein oder mehrere Umlenkrollen an der die Spanneinrichtung aufweisenden Seitenwand geführt. Die Unterste der das Spannmittel führenden Umlenkrollen und der Laschpunkt für den Haken des Spannmittels sind zum Behälterboden vorzugsweise in einem Abstand von 30 cm oder mehr, besonders bevorzugt zwischen 0,5 m und 1 m angeordnet. Unter einem Ratschenspanner ist ein Spannmittel mit einer Welle zum Aufwickeln des Spannmittels und einem an der Welle angeordneten Sperrrad zu verstehen. Dem Sperrrad ist vorzugsweise eine Sperrklinke zugeordnet, mit der das Drehen in eine Drehrichtung zugelassen ist und in die entgegengesetzte Drehrichtung verhindert wird.

In einer Ausführungsform des erfindungsgemäßen Behälters weisen der Behälterboden des Aufnahmebereichs und/oder die den Aufnahmebereich seitlich begrenzenden Seitenwände ein oder mehrere Zurrösen auf. Wie oben stehend beschrieben, werden die Zurrösen am Behälterboden und an den Seitenwänden insbesondere als Laschpunkte für die Ladungssicherung verwendet.

Insbesondere wird eine der Zurrösen am Behälterboden nahe der verschließbaren Öffnung verwendet, um das Hakenteil am Ende des Zugmittels der Winde des Behälters zu fixieren. Dadurch wird das vollständige Auf- und Abrollen des Zugmittels für das in den Aufnahmebereich zu verbringende havarierte Fahrzeug vermieden, was die Bergungszeit erheblich reduziert.

In einer Ausführungsform der Erfindung weisen die den Behälterboden in Längsrichtung seitlich begrenzenden Seitenwände außenseitig entlang des oberen Kantenbereichs mehrere in einem gleichmäßigen Abstand nebeneinander angeordnete Zurrösen auf.

Vorzugsweise weisen der Behälterboden des Aufnahmebereichs und/oder die dem Aufnahmebereich zugewandte Seite der Klappe zumindest bereichsweise eine strukturierte Oberfläche auf, wobei die strukturierte Oberfläche vorzugsweise als Blech mit eingewalztem Muster ausgebildet ist, bevorzugt als Riffelblech. Mit der Anordnung bzw. Ausgestaltung eines Musterblechs auf insbesondere Gehbereichen von Behälterboden und Klappe ist die Rutschfestigkeit auf dem Behälterboden bzw. der Klappe für die Bergungsfachkräfte erhöht. Vorzugsweise kommt ein Riffelblech, wie beispielsweise ein Tränen- oder Linsenblech nach DIN 59220:2000-4 oder DIN EN 1386:2008-5, zum Einsatz.

Gemäß einer anderen bevorzugten Weiterbildung weist der Behälter Außenabmessungen in einem Bereich von etwa 5,9 m x 2,4 m x 1,7 m bis 6,9 m x 2,6 m x 2,6 m auf. Bevorzugt kommt ein Behälter mit Maßen nach Feuerwehrnorm DIN 14505:2015-01 und DIN 30722-1:2015-12 oder ein 20'-ISO-Container zum Einsatz. Das Volumen des Behälters im Inneren beträgt vorzugsweise ca. 20 Kubikmeter. An der Außenseite der Stirnwand des Behälters ist vorzugsweise ein, insbesondere etwa 45 Grad nach oben zeigender, Aufnahmehaken auf einer Höhe von ca. 1,6 m angeordnet. Hinter dem Aufnahmehaken ist mittig an der Stirnwand ein Auffahrschutz in Form eines verstärktem Blechs angeordnet. Im Endbereich des Behälters, in dem die Öffnung zum Überführen des Fahrzeuges ausgebildet ist, sind auf der Unterseite des Behälterbodens vorzugsweise zwei oder mehr Rollen zum Bewegen des Behälters angeordnet. Die Rollen, haben vorzugsweise einen Innenabstand von etwa 1,6 m und einen Außenabstand von 2, 2 m. Zudem sind vorzugsweise die Stirnwand wie auch die Seitenwände in Längs- und in Querrichtung durch Profile auf der Außenseite verstärkt, um im Anwendungsfall dem im Inneren wirkenden Wasserdruck bis zu einer vorbestimmten Füllhöhe widerstehen zu können.

In einer bevorzugten Ausgestaltung weist die Seitenwand, welche gegenüberliegend zur Öffnung des Behälters angeordnet ist, vorzugsweise an ihrer dem Aufnahmebereich abgewandten Seite einen Steuerschrank mit einem Elektroanschluss und/oder zwei Akkumulatoren zur Stromversorgung der Winde auf. Mittels der Akkumulatoren ist ein autarker Betrieb der im Aufnahmebereich des erfindungsgemäßen Behälters angeordneten Winde möglich. Die Leistung der Akkumulatoren reicht vorzugsweise aus, um etwa zehn Ziehvorgänge eines Fahrzeuges in den Aufnahmebehälter durchzuführen. Über den Elektroanschluss erfolgt beispielsweise das Aufladen der Akkumulatoren. Innerhalb des Steuerschranks ist ferner bevorzugt ein Anschlusskontakt für eine Fernbedienung vorgesehen, mit der sämtliche am Behälter angeordneten elektrischen Bauteile angesteuert werden können. Der Anschlusskontakt ist insbesondere an einem acht Meter langen Spiralkabel innerhalb des Steuerschrankes aufgenommen. Die Fernbedienung kann optional auch als Funkfernbedienung ausgebildet sein, worüber eine kabellose Ansteuerung der am Behälter angeordneten Elektrogeräte möglich ist.

Vorzugsweise umfasst die Anzahl Anschlüsse einen, vorzugsweise mindestens zwei Anschlüsse mit einer Schlauchkupplung zum Anschluss von Saug- und/oder Druckschläuchen, vorzugsweise Storz-Kupplungen ausgerüstet, welche als Abgang vorzugsweise mit einem Absperrorgan ausgebildet und in der Seitenwand, welche gegenüberliegend zur Öffnung angeordnet ist, und/oder der Klappe angeordnet sind. Mittels dem, an den Anschlüssen angeordneten, Absperrorgan, beispielsweise einem Kugelhahn, wird der Durchlass freigegeben oder abgesperrt. Vorzugsweise sind in jedem unteren Eckbereich der als Stirnwand ausgebildeten Seitenwand und der gegenüberliegend angeordneten Klappe je ein Anschluss mit einer Storz-Kupplung nach DIN 14323: 1985-04 ausgebildet.

In einer anderen Ausgestaltung des erfindungsgemäßen Behälters umfasst die Anzahl Anschlüsse einen, vorzugsweise mindestens zwei Anschlüsse mit Schlauchkupplungen zum Anschluss von Saug- und/oder Druckschläuchen, vorzugsweise Storz-Kupplungen, welche zum Einleiten des Kühl- bzw. Löschmittels ausgebildet und in einem Abstand von mehr als 0,5 m, vorzugsweise in einem Bereich von 0,8 m bis 1,2 m, besonders bevorzugt von ungefähr einem Meter zum Behälterboden an der Seitenwand angeordnet sind, welche gegenüberliegend zur Öffnung angeordnet ist. Über die Anschüsse mit insbesondere Storz-Kupplungen nach DIN 14303:2013-02 oder nach DIN 14322: 1989-09, wird das Kühl- und Löschmittel in einem Abstand von etwa einem Meter oberhalb des Behälterbodens eingeleitet. Vorzugsweise sind die Anschlüsse zum Einleiten des Kühl- bzw. Löschmittels außermittig und in einem Abstand von etwa 30 cm oder mehr zueinander, insbesondere auf gleicher Höhe angeordnet. Ein in den Aufnahmeraum verbrachtes havariertes Fahrtzeug gelangt bereits zu Beginn des Einleitens des Kühl- und Löschmittels direkt mit diesem in Kontakt. Darüber hinaus wird ein über ein einseitiges Einleiten des Kühl- und Löschmittels eine zirkulierende Strömung innerhalb des Aufnahmebereichs und damit eine gute Durchmischung des Kühl- und Löschmittels im Aufnahmebereich gewährleistet.

Vorzugsweise sind an einer der Seitenwände eine Kamera, vorzugsweise eine IR-Kamera, und/oder ein oder mehrere den Aufnahmebereich ausleuchtende Leuchtmittel angeordnet. Mit Hilfe der Kamera kann der Löschvorgang im erfindungsgemäßen Behälter überwacht werden. Die Verwendung einer IR-Kamera ermöglicht darüber hinaus das Erfassen von Temperaturfeldern, wodurch sich ermitteln lässt, ob die Temperatur im Aufnahmebereich unterhalb der kritischen Zündtemperatur liegt, so dass ein selbstständiges Wiederentfachen des Brandes vermieden wird. Die durch die Kamera aufgenommenen Bilder können vorzugsweise zur Protokollierung des Brandverlaufes oder einer möglichen Unfallauswertung in einer mit der Kamera datenübertragend gekoppelten Speichereinheit abgelegt werden. Bevorzugt ist die Speichereinheit in einem am Behälter angeordneten Steuerschrank angeordnet. Mit Hilfe der im Inneren des Aufnahmebereichs angeordneten Leuchtmittel, kann auch bei schlechten Sichtverhältnissen der Aufnahmebereich sicher ausgeleuchtet werden. Vorzugsweise weisen die Leuchtmittel eine Schutzart von mindestens IP 65 auf.

Die Erfindung betrifft in einem weiteren Aspekt ein Transportfahrzeug, insbesondere eine Wechsellader-Fahrzeug, mit einem Fahrgestell und einer Ladefläche, und einer Wechsellader-Einrichtung zum Aufnehmen eines Behälters auf der Ladefläche und Absetzen des Behälters (am Einsatzort), und einem auf der Ladefläche aufnehmbaren Behälter, insbesondere Abrollbehälter, Absetzbehälter oder ISO-Container. Unter einem Transportfahrzeug wird hier vorliegend ein selbstfahrendes als auch ein nicht selbstfahrendes Fahrzeug, worunter beispielsweise auch Anhänger oder Auflieger fallen, verstanden.

Die Erfindung löst auch die bei der erfindungsgemäßen Vorrichtung zugrundegelegte Aufgabe, indem der mittels des Fahrzeugs aufgenommene Behälter nach einer der vorstehend beschriebenen bevorzugten Ausführungsformen der Erfindung ausgebildet ist. Ein solch erfindungsgemäßer Behälter kann auf einfache Weise an einen Einsatzort verbracht und dort nahe des havarierten Fahrzeugs abgestellt werden. Dieses wird mittels der Winde in den Aufnahmebereich des erfindungsgemäßen Behälters verbracht und durch Eingeben von Kühl- bzw. Löschmittel gelöscht. Zugleich wird eine Kontamination der Umgebung vermieden. In einer Ausführungsform der Erfindung ist der am Transportfahrzeug angeordnete Kran dazu eingerichtet, über ein am Kran angeordnetes Greifmittel ein havariertes Fahrzeug, insbesondere ein bereits ausgebranntes Fahrzeug, anzuheben und von oben durch das offene Dach in den Behälter zu überführen.

Die Erfindung betrifft gemäß einem weiteren Aspekt ein Verfahren zum Bergen eines havarierten Fahrzeugs, insbesondere unter Verwendung eines Behälters nach einem der vorstehend beschriebenen bevorzugten Ausführungsformen.

Das erfindungsgemäße Verfahren löst die eingangs beschriebene Aufgabe mit den Schritten: Absetzen eines Behälters von einer Ladefläche eines Transportfahrzeugs (an einem Einsatzort) und Zugänglichmachen eines Aufnahmebereichs des Behälters, wobei vorzugsweise das Zugänglichmachen des Aufnahmebereichs das Öffnen einer Klappe an der hinteren Stirnseite des Behälters beinhaltet; Verbringen des havarierten Fahrzeugs in den Aufnahmebereich des Behälters, wobei vorzugsweise das Verbringen des Fahrzeugs das Ziehen des Fahrzeugs mittels einer am Behälter angeordneten Winde in den Aufnahmebereich umfasst; wobei weiter vorzugsweise der Schritt des Verbringens, das Umlegen eines Zurrgurtes um das Fahrzeug und das Koppeln des vorzugsweise zu einer Schlaufe ausgebildeten Zurrgurtes mit dem Seilende der Winde umfasst; Verschließen des Aufnahmebereichs und Einfüllen von Kühl- bzw. Löschmittel, insbesondere Löschwasser, in den verschlossenen Aufnahmebereich. Der Erfindung liegt die Erkenntnis zugrunde, dass mit Hilfe der erfindungsgemäßen Verfahrensschritte eine einfache Bergung eines havarierten und unter Umständen bereits brennenden Fahrzeugs und ein vereinfachtes, aber zugleich sicheres Löschen des Fahrzeugs im Aufnahmebereich des Behälters möglich ist. Vorzugsweise ist über das Eingeben des Kühl- bzw. Löschmittels in den Aufnahmebereich des erfindungsgemäßen Behälters ein bevorzugt dauerhafter Kontakt des Kühl- bzw. Löschmittels mit einem in Brand geratenen Akkumulator eines Elektrofahrzeugs gewährleistet. Das Kühl- bzw. Löschmittel verbleibt somit dauerhaft in Kontakt mit dem Akkumulator, wodurch dieser zum einen gelöscht und zum anderen effektiv heruntergekühlt wird, dass ein selbsttätiges Wiederentflammen vermieden, vorzugsweise ausgeschlossen werden kann. Ferner ist mit dem Ausbilden eines geschlossenen Aufnahmeraumes das Abfließen von mit dem brennenden Gegenstand in Kontakt gelangtem Löschwasser, das beispielsweise mit schädlichen bzw. giftigen Schadstoffen kontaminiert sein kann, in die Umwelt vermieden. Das mit Schadstoffen durchsetzte bzw. beladene Kühl- bzw. Löschmittel verbleibt sicher im Aufnahmebereich des Behälters.

Gemäß einer bevorzugten Ausgestaltung umfasst das erfindungsgemäße Verfahren einen, mehrere oder sämtliche der nachfolgend aufgeführten Schritte: Absetzen des Behälters mittels einer Wechsellader- oder Kran-Einrichtung am Transportfahrzeug; Schließen der Klappe durch Verschwenken der Klappe um eine horizontale Schwenkachse in eine abdichtende Schließstellung am Behälter; Einfüllen des Kühl- bzw. Löschmittels bis zu einem vorbestimmten Füllstand im Aufnahmebereich über vorzugsweise an einer Stirnseite des Behälters angeordnete Löschmittel-Anschlüsse; Entleeren des Aufnahmebereichs durch vorzugsweise Überleiten des Kühl- bzw. Löschmittels in einen mobilen Tank; Sichern des Fahrzeuges nach dem Bergen vorzugsweise mittels einer Einrichtung zur Ladungssicherung innerhalb des Aufnahmebereiches, und Aufnehmen des Behälters zusammen mit dem im Aufnahmebereich befindlichen Fahrzeug auf einem Transportfahrzeug. Mit Hilfe zumindest einer der oben angeführten weiteren Verfahrensschritte ist das erfindungsgemäße Verfahren zum Bergen eines havarierten Fahrzeugs wie Elektrofahrzeug oder Fahrzeug mit Verbrennungsmotor, weiter vereinfacht.

Die zum erfindungsgemäßen Behälter beschriebenen, bevorzugten Ausführungsformen bzw. Weiterbildungen sind zugleich auch bevorzugte Ausführungsformen des erfindungsgemäßen Fahrzeugs sowie des erfindungsgemäßen Verfahrens zum Bergen eines havarierten Fahrzeugs. Hierin beschriebene bevorzugte Ausführungsformen bzw. Weiterbildungen des Fahrzeugs sowie des Verfahrens zum Bergen eines havarierten Fahrzeugs, welche sich auf den Behälter beziehen, sind zugleich bevorzugte Ausführungsformen des Behälters.

Die Erfindung betrifft in einem weiteren Aspekt ebenfalls die Verwendung eines Behälters, insbesondere eines Abrollbehälters, Absetzbehälters oder ISO-Containers, nach einer der vorstehend beschriebenen bevorzugten Ausführungsformen, zum Bergen, insbesondere zum Kühlen bzw. Löschen eines havarierten Elektrofahrzeugs. Die Erfindung betrifft ferner auch die Verwendung eines Behälters nach einer der vorstehend beschriebene bevorzugten Ausführungsformen, zum Bergen, insbesondere zum Kühlen bzw. Löschen eines havarierten Fahrzeugs mit Verbrennungsmotor. Hinsichtlich der erfindungsgemäßen Vorteile und bevorzugte Ausführungsformen der Verwendung, die dieselben wie die Vorteile und bevorzugten Ausführungsformen der Vorrichtung und des Verfahrens sind, wird auf die vorstehenden Ausführungen verwiesen.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Ansicht des erfindungsgemäßen Abrollbehälters;
- Fig. 2:: eine Detailansicht des erfindungsgemäßen Abrollbehälters nach Fig. 1 bei geöffneter Klappe während der Bergung eines havarierten Fahrzeugs;
- Fig. 3:: eine Ansicht eines Zurrgurtes zum Verbringen des Fahrzeuges in den Behälter;
- Fig. 4:: eine Ansicht auf die Innenseite der als Stirnwand ausgebildeten Seitenwand des erfindungsgemäßen Abrollbehälters
- Fig. 5:: eine Ansicht in den Aufnahmebereich für das Fahrzeug;
- Fig. 6:: eine Seitenansicht des erfindungsgemäßen Abrollbehälters auf seine als Stirnwand ausgebildete Seitenwand von außen, und
- Fig. 7:: eine Seitenansicht des erfindungsgemäßen Abrollbehälters auf die geschlossene Klappe.

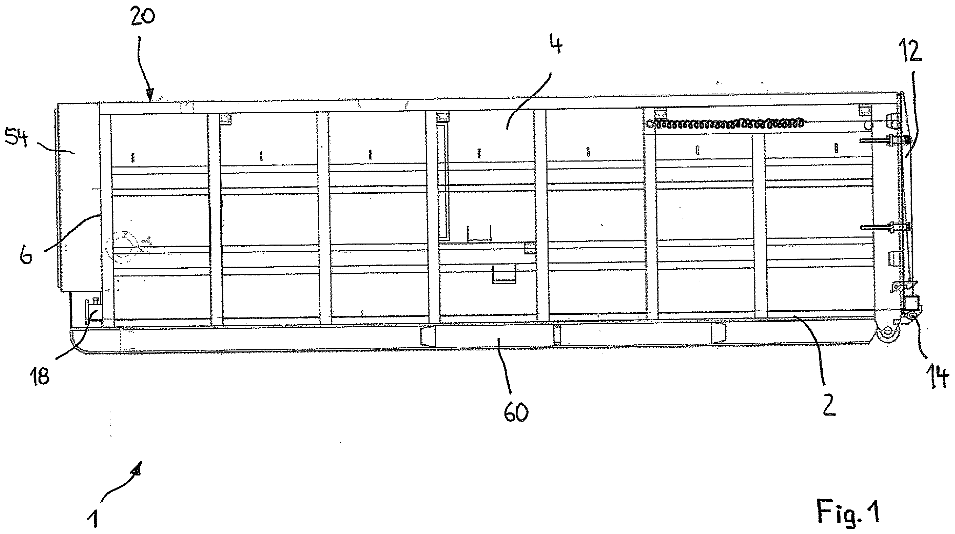

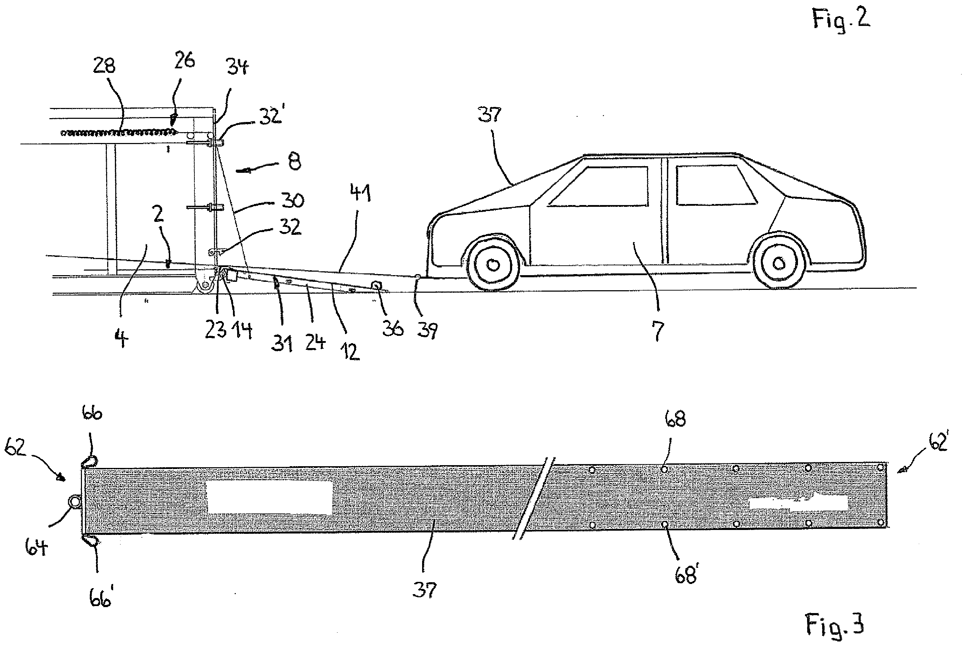

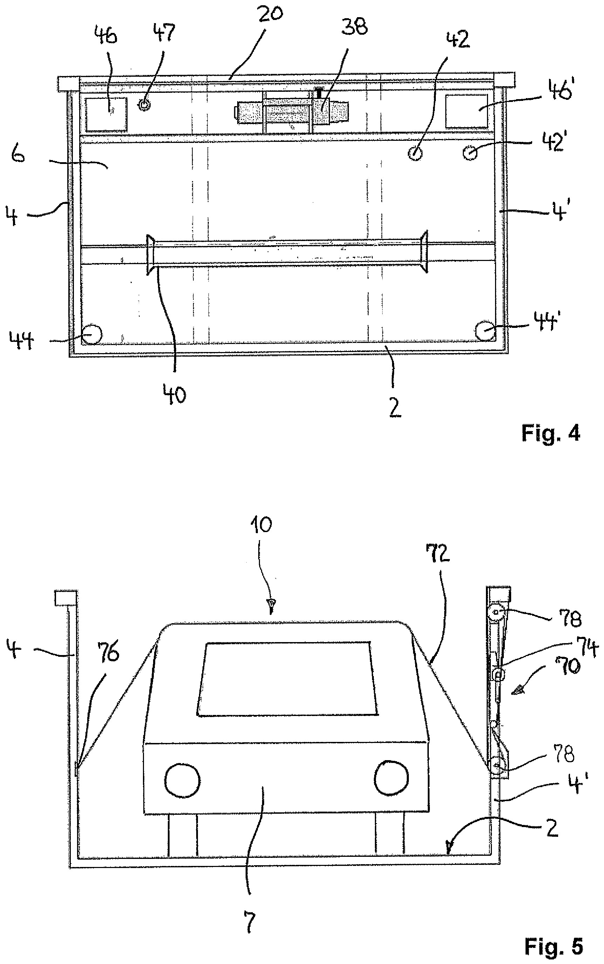

Fig. 1 zeigt einen als Abrollbehälter spezifizierten Behälter 1, der einen Behälterboden 2, zwei sich entlang der Längsseiten des Behälterbodens 2 erstreckende Seitenwände 4, 4' und eine als Stirnwand ausgebildete Seitenwand 6 aufweist. Am Behälter 1 ist eine Öffnung 8 (Fig. 2) gegenüberliegend der Seitenwand 6 angeordnet, über welche ein Fahrzeug 7 (Fig. 2) in den oder aus dem Aufnahmebereich 10 (Fig. 5) des Behälters 1 überführt wird. Der Öffnung 8 ist eine Klappe 12 zugeordnet, welche um eine waagerechte Schwenkachse 14 am Behälter 1 schwenkbar gelagert ist. In Fig. 1 ist die Klappe 12 in ihrer Schließstellung abgebildet, wodurch der Aufnahmebereich 10 seitlich und nach unten geschlossen ist. Damit ist ein Aufnahmeraum für das havarierte Fahrzeug 7 ausgebildet, insbesondere ein Elektrofahrzeug. Um einen Brand am Fahrzeug, insbesondere einen brennenden Akkumulator an einem Elektrofahrzeug zu löschen, weist der Behälter 1 Anschlüsse 16, 16' zum Einleiten von Kühl- bzw. Löschmittel in den Aufnahmebereich 10 (Fig. 4) und Anschlüsse 18, 18' zum Abführen von Kühl- bzw. Löschmittel aus dem Aufnahmebereich 10 auf.

Weiterhin ist am Behälter 1 ein sich oberhalb der Seitenwand 6 und entlang eines Abschnittes der einander gegenüberliegenden Seitenwände 4, 4' erstreckendes Dach 20 vorgesehen. In der in Fig. 1 gezeigten Ausführungsform ist das Dach 20 als fester Dachabschnitt ausgebildet, welcher sich ausgehend von der Seitenwand 6 über einen Abschnitt von etwa 60 bis 80 cm in Längsrichtung des Behälters 1 erstreckt. Das Dach 20 weist einen (nicht gezeigten) Windendeckel auf, über den eine unterhalb des festen Daches 20 angeordnete Winde 38 zugänglich ist. In einer (nicht näher dargestellten) Ausführungsform ist anstelle des festen Daches 20 ein Faltdach vorgesehen, welches in seiner geschlossenen Position dazu eingerichtet ist, die Oberseite des Behälters 1 vollständig zu verschließen.

Der in Fig. 1 abgebildete Behälter 1 weist Außenabmessungen von etwa 5,9 x 2,6 x 1,7 m und Innenabmessungen von etwa 5,5 x 2,3 x 1,5 m auf und ist kompatibel zu der Feuerwehrnorm DIN 14505 und der Norm DIN 30722-1 ausgebildet.

Fig. 2 zeigt den Behälter 1 im Bereich seiner Öffnung 8 zwischen den Seitenwänden 4, 4' und der schwenkbar angelenkten Klappe 12. Die Klappe 12 bildet in ihrer in Fig.2 gezeigten Offenstellung eine Rampe bzw. schiefe Ebene aus, über die das havarierte Fahrzeug 7 in den Aufnahmebereich 10 des Behälters 1 überführt werden kann. Die Klappenkante 22 der Klappe 12 an der Schwenkachse 14 ist auf gleicher Höhe angeordnet, wie die Oberseite des Behälterbodens 2. An der Klappe 12 ein Abdeckblech 23 schwenkbar angeordnet, das in Überfahrrichtung des Fahrzeuges 7 eine gekrümmte Form aufweist. Die Klappe 12 weist ferner Verstärkungsprofile 24 auf, welche die Festigkeit der Klappe 12 in Überfahrrichtung erhöhen. Zudem sind am Behälter 1 eine oder mehrere Schließhilfen 26 mit einem Federmechanismus 28 angeordnet. Der Federmechanismus 28 ist über ein Zugseil 30 mit einer Seitenkante 31 der Klappe 12 gekoppelt. Die Klappe 12 wird von Hand geschlossen, wobei über die Schließhilfe 26 die zum Bewegen der Klappe 12 benötigte Kraft gering ausfällt. Der Federmechanismus 28 der Schließhilfe 26 weist einen Federweg von 30 cm auf. Die Schließhilfe 26 ist zudem dazu eingerichtet, die Klappe 12 in ihrer Schließstellung zu halten. Zusätzlich weisen die Seitenwände 4, 4' Verriegelungen 32, 32' auf, welche die Klappe 12 in abdichtender Anlage mit den Seitenwänden 4, 4' und dem Behälterboden 2 halten. Entlang der Seitenwände 4, 4' und entlang des Behälterbodens 2 ist ein Dichtungselement 34 angeordnet. Wie weiterhin aus Fig. 2 ersichtlich, sind an der Klappe 12 an der Seitenkante 31 innenseitig vorstehende Halteteile 36 angeordnet, welche in Schließstellung der Klappe 12 die Seitenwände 4, 4' außen umgreifen, wodurch das Ausweichen der Seitenwand nach außen verhindert wird.

Fig. 2 verdeutlicht weiterhin den Vorgang des Bergens des havarierten Fahrzeuges 7 in den Behälter 1. Um das havarierte Fahrzeug 7 wird vorzugsweise mittig, in Längsrichtung des Fahrzeuges 7 ein Zurrgurt 37 herumgeführt. Dessen Enden 62, 62' werden so miteinander verbunden, dass eine geschlossene Schlaufe um die Karosserie des Fahrzeuges 7 erzeugt wird. Am Ende 62 des Zurrgurtes 37, wie auch aus Fig. 3 zu entnehmen, vorzugsweise ist ein ösenartiges Anschlagmittel 64 für ein Hakenelement 39 vorgesehen, das insbesondere am freien Ende des als Zugmittel ausgebildeten Seiles 41 befestigt ist.

Der Zurrgurt 37 umfasst eine Einrichtung zur Längenverstellung, welche zwei Karabinerhaken 66, 66' aufweist, die am Ende 62 an den Längsseiten des Zurrgurtes 37 angeordnet sind und mit einem am gegenüberliegenden Ende 62' angeordneten Paar von Einhakösen 68, 68' korrespondieren. Dabei sind am Ende 62' des Zurrgurtes mehrere Paare von Einhakösen 68, 68' ausgebildet, welche' in Abständen von etwa 50 cm zueinander entlang der Seitenkanten des Zurrgurtes 37 angeordnet sind. Über die Einhakösen 68, 68' kann die Länge der das Fahrzeug umgebenden Schlaufe in Abhängigkeit von der Größe des Fahrzeuges 7 angepasst werden.

In einer Ausführungsform der Erfindung sind die Paare von Einhakösen 68, 68' ausgehend vom Ende 62' über eine Länge von etwa 3 m entlang des Zurrgurtes 37 angeordnet. Der in Fig. 3 abgebildete Zurrgurt 37 weist ungefähr eine Länge von etwa 15 m und eine Breite von etwa 60 cm auf. Die Materialdicke des zur Ausbildung des Zurrgurtes 37 verwendeten Materials liegt ungefähr zwischen 0,5 cm und 1 cm. Das zur Ausbildung des Zurrgurtes 37 verwendete Material ist bevorzugt nach DIN 4102 nicht brennbar ausgeführt.

Wie Fig. 4 zeigt, ist auf der Innenseite der Seitenwand 6 des Behälters 1 eine Seilwinde 38 zum Verbringen des Fahrzeugs in den Aufnahmebereich 10 angeordnet, welche in einem Abstand von wenigstens 1,2 Metern oberhalb des Behälterbodens 2 angeordnet ist. In einer nicht näher dargestellten Ausführungsform ist die Seilwinde 38 auf der Innenseite der Seitenwand 6 parallel zum Behälterboden 2 verschieblich aufgenommen. Auf der Innenseite der Seitenwand 6 ist des Weiteren zwischen der Seilwinde 38 und dem Behälterboden 2 eine Umlenkrolle 40 für das Seil der Seilwinde 38 angeordnet. Die Umlenkrolle 40 ist in der gezeigten Ausführungsform in einer Höhe von etwa 500 Millimetern oberhalb des Behälterbodens 2 angeordnet und hat eine Rollenbreite, welche mindestens der halben Breite der Seitenwand 6 entspricht. In einer Ausführungsform ist vor der Umlenkrolle 40 auf derselben Höhe ein Rohr mit einem Durchmesser von 9 cm als Anfahrschutz angeordnet.

Wie aus Fig. 4 weiterhin ersichtlich, sind an der als Stirnwand ausgebildeten Seitenwand 6 in einer Höhe von etwa einem Meter außermittig versetzt zwei Einlässe 42, 42' für das Kühl- bzw. Löschmittel ausgebildet. In beiden unteren Ecken der Seitenwand 6 ist jeweils ein Auslass 44, 44' zum Abführen des Kühl- bzw. Löschmittels vorgesehen. Weiterhin ist an der Seitenwand 6 zu beiden Seiten der Seilwinde 38 jeweils ein als LED-Spot ausgebildetes Leuchtmittel 46, 46' angeordnet. Darüber hinaus ist an der Seitenwand 6 eine Infrarot-Kamera 47 angeordnet, die in den Aufnahmebereich 10 für das Fahrzeug 7 gerichtet ist.

Fig. 5 zeigt den Aufnahmebereich 10 des Behälters 1, in dem ein havariertes Fahrzeug 7 aufgenommen ist. Zum Sichern des geborgenen Fahrzeuges 7 im Aufnahmebereich 10, insbesondere nach einem erfolgten Löschvorgang, weist der Behälter 1 eine Einrichtung 70 zur Ladungssicherung im Aufnahmebereich 10 auf. Die Einrichtung 70 zur Ladungssicherung umfasst ein quer zur Längsachse des Behälters 1 spannbares Spannmittel 72. Das Spannmittel 72 ist über eine an der Seitenwand 4' angeordnete Spanneinrichtung 74 zumindest teilweise aufwickelbar. Die Spanneinrichtung 74 umfasst einen von Hand betätigbaren Ratschenspanner. Das freie Ende des Spannmittels 72, wie beispielsweise ein Spanngurt, wird auf der Innenseite der gegenüberliegend zur Spanneinrichtung 74 angeordneten Laschöse 76 in Eingriff gebracht. Das Sichern des Fahrzeuges 7 im Aufnahmebereich 10 erfolgt durch Spannen des Spannmittels 72, welches insbesondere über mehrere Umlenkrollen 78, 78' geführt wird, mittels der Spanneinrichtung 74.

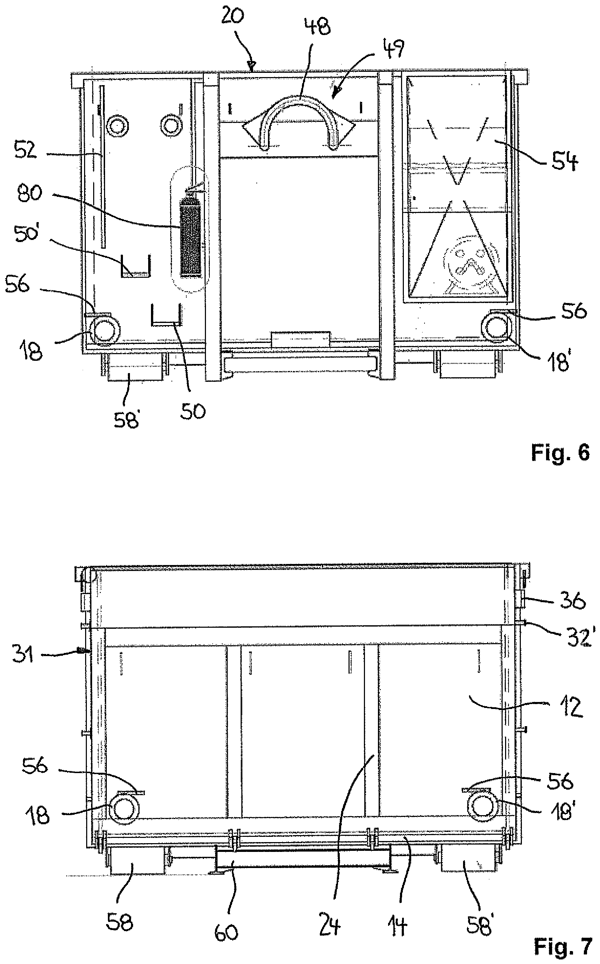

Fig. 6 zeigt die Außenseite der als Stirnwand ausgebildeten Seitenwand 6. An der Seitenwand 6 ist mittig in einer Höhe von etwa 1,6 m ein Aufnahmehaken 48 für ein mit dem Behälter 1 in Wirkverbindung bringbares Hakenteil einer nicht gezeigten Wechsellader-Einrichtung angeordnet. Der Bereich hinter dem Aufnahmehaken 48 ist mit einem Anfahrschutz 49 ausgerüstet. Der Anfahrschutz ist ein die Seitenwand 6 verstärkendes Blech. Zudem sind zwei Klapptritte 50, 50' und ein Handlauf 52 vorgesehen. Weiterhin ist an der Außenseite der Seitenwand 6 ein Steuerschrank 54 angeordnet, in dem Akkumulatoren zum Betreiben der Seilwinde 38 aufgenommen und wenigstens ein nicht näher gezeigter Elektroanschluss zum Aufladen der Akkumulatoren und/oder zum externen Speisen der Seilwinde 38 enthalten sind. An der Stirnwand ist zudem ein Feuerlöscher 80 reversibel lösbar montiert.

Fig. 6 zeigt ferner die mit den Einlässen 42, 42' und den Auslässen 44, 44' fluidleitend verbundenen Anschlüsse 16, 16' zum Einleiten von Löschmittel in den Aufnahmebereich 10 und Anschlüsse 18, 18' zum Abführen von Löschmittel aus den Aufnahmebereich 10.

In Fig. 7 ist der Behälter 1 mit Blick auf seine geschlossene Klappe 12 gezeigt. An der Außenseite der Klappe 12 sind die parallel zu den Seitenkante 31 verlaufenden Verstärkungsprofile 24 angeordnet. An den beiden unteren Ecken der Klappe 12 sind ebenfalls Anschlüsse 18, 18' zum Abführen des Kühl- bzw. Löschmittels angeordnet. Die Anschlüsse 18, 18' sind mit Storz-Kupplungen und einem Absperrhahn 56 ausgerüstet. Die Anschlüsse 42, 42' sind ebenfalls mit Storz-Kupplungen ausgerüstet. Zudem verdeutlicht Fig. 5 die Anordnung der Rollen 58, 58' unterhalb der Außenbereiche und am hinteren Ende nahe der Öffnung 8 des Behälters 1. Zwischen den Rollen 58, 58' ist die sich in Längsrichtung an der Unterseite des Behälterbodens 2 erstreckende Ablaufschiene 60 angeordnet, welche mit einer nicht näher dargestellten Ablaufrolle eines nicht gezeigten Wechsellader-Fahrzeugs während des Abladens bzw. des Aufladens des Behälters 1 in Kontakt steht.

**Bezugszeichenliste**

| | | | |
|---|---|---|---|
| 1 | Behälter | 40 | Umlenkrolle |
| 2 | Behälterboden | 41 | Seil |
| 4, 4' | Seitenwand | 42, 42' | Einlass |
| 6 | Seitenwand | 44, 44' | Auslass |
| 7 | Fahrzeug | 46, 46' | Leuchtmittel |
| 8 | Öffnung | 47 | Kamera |
| 10 | Aufnahmebereich | 48 | Aufnahmehaken |
| 12 | Klappe | 49 | Anfahrschutz |
| 14 | Schwenkachse | 50, 50' | Klapptritt |
| 18, 18' | Anschluss | '52 | Handlauf |
| 20 | Dach | 54 | Steuerschrank |
| 22 | Klappenkante | 56 | Absperrhahn |
| 23 | Abdeckblech | 58, 58' | Rollen |
| 24 | Verstärkungsprofil | 60 | Ablaufschiene |
| 26 | Schließhilfe | 62, 62' | Ende |
| 28 | Federmechanismus | 64 | Anschlagmittel |
| 30 | Zugseil | 66, 66' | Karabinerhaken |
| 31 | Seitenkante | 68, 68' | Einhaköse |
| 32, 32' | Verriegelung | 70 | Einrichtung zur Ladungssicherung |
| 34 | Dichtungselement | 72 | Spannmittel |
| 36 | Halteteil | 74 | Spanneinrichtung |
| 37 | Zurrgurt | 76 | Laschöse |
| 38 | Seilwinde | 78, 78' | Umlenkrolle |
| 39 | Hakenelement | 80 | Feuerlöscher |

## Patentansprüche

1. Behälter, insbesondere Abrollbehälter, Absetzbehälter oder ISO-Container, zum Bergen havarierter Fahrzeuge, insbesondere havarierter Elektro-Fahrzeuge, mit
einem Behälterboden (2) und mehreren Seitenwänden (4, 4', 6), die einen Aufnahmebereich (10) für das Fahrzeug (7) definieren,
einer verschließbaren Öffnung (8) zum Überführen des Fahrzeuges in den oder aus dem Aufnahmebereich (10),
einer am Behälter (1) angeordneten Winde (38), insbesondere Seilwinde, zum Verbringen des Fahrzeuges in den Behälter (1), und **gekennzeichnet durch** eine Anzahl von am Behälter (1) angeordneten Anschlüssen zum Einleiten (42, 42') und/oder Abführen (18, 18') von Kühl- bzw. Löschmittel in den Aufnahmebereich.

2. Behälter nach Anspruch 1,
**dadurch gekennzeichnet, dass** die Winde (38) im Aufnahmebereich (10) und zum Behälterboden (2) in einem Abstand von wenigstens 1,2 m angeordnet ist.

3. Behälter nach Anspruch 1 oder 2,
**dadurch gekennzeichnet, dass** zwischen der Winde (38) und dem Behälterboden (2) eine Umlenkung (40) angeordnet ist.

4. Behälter nach einem der vorstehenden Ansprüche,
**dadurch gekennzeichnet, dass** mit dem Ende eines Zugmittels (41) der Winde (38), insbesondere dem Ende des Windenseiles, ein Zurrgurt (37) gekoppelt ist, der vorzugweise in seiner Länge verstellbar ist, und der dazu angepasst ist, um das havarierte Fahrzeug (7) herum geführt zu werden.

5. Behälter nach einem der vorstehenden Ansprüche,
**gekennzeichnet durch** ein sich gegenüber dem Behälterboden entlang zumindest eines Abschnittes der Seitenwände (4, 4') erstreckendes Dach (20), wobei das Dach (20) vorzugsweise als fester Dachabschnitt oder als Schiebedach, vorzugsweise als Faltdach, ausgebildet ist.

6. Behälter nach mindestens einem der vorstehenden Ansprüche,
**dadurch gekennzeichnet, dass** der Öffnung (8) eine Klappe (12) zugeordnet ist, welche um eine waagerechte Schwenkachse (14) am Behälter (1) schwenkbar gelagert ist, wobei vorzugsweise an der Klappe (12) ein schwenkbares Spalt-Abdeckblech (23) angeordnet ist.

7. Behälter nach Anspruch 6,
**dadurch gekennzeichnet, dass** die Klappe (12) mehrere aus der Klappenebene vorstehende Halteteile (36) aufweist, welche die Seitenwände (4, 4') zu beiden Seiten der Öffnung (8) außenseitig umgreifen und /oder
dass am Behälter (1) eine oder mehrere Schließhilfen (26) für die Klappe (12) angeordnet sind, welche vorzugsweise einen über Zugseile (30) an der Klappe (12) angreifenden Federmechanismus (28) aufweisen.

8. Behälter nach mindestens einem der vorstehenden Ansprüche,
**dadurch gekennzeichnet, dass** der Öffnung (8) eine Leiteinrichtung für das in den Aufnahmebereich (10) zu überführende Fahrzeug (7) zugeordnet ist, welche vorzugsweise zwei seitliche Leitbleche oder Leitplanken aufweist.

9. Behälter nach mindestens einem der vorstehenden Ansprüche,
**gekennzeichnet durch** wenigstens eine Einrichtung (70) zur Ladungssicherung des havarierten Fahrzeugs (7) im Aufnahmebereich (10) des Behälters.

10. Behälter nach Anspruch 9,
**dadurch gekennzeichnet, dass** die Einrichtung (70) zur Ladungssicherung wenigstens ein vorzugsweise quer zur Längsachse des Behälters (1) spannbares Spannmittel (72), vorzugsweise einen Spanngurt, und eine mit dem Spannmittel (72) korrespondierende Spanneinrichtung (74) auf, insbesondere einen Ratschenspanner, aufweist.

11. Behälter nach mindestens einem der vorstehenden Ansprüche,
**dadurch gekennzeichnet, dass** der Behälterboden (2) des Aufnahmebereichs (10) und/oder die den Aufnahmebereich seitlich begrenzenden Seitenwände (4, 4', 6) ein oder mehrere Zurrösen aufweisen.

12. Behälter nach mindestens einem der vorstehenden Ansprüche,
**dadurch gekennzeichnet, dass** der Behälter Außenabmessungen in einem Bereich von etwa 5,9m x 2,4m x 1,7m bis 6,9m x 2,6m x 2,6m aufweist.

13. Behälter nach mindestens einem der vorstehenden Ansprüche,
**dadurch gekennzeichnet, dass** der Behälter (1) Außenabmessungen von etwa 5,9 x 2,6 x 1,7 m und Innenabmessungen von etwa 5,5 x 2,3 x 1,5 m aufweist und/oder die Behälteroberfläche eine korrosionsbeständige Beschichtung aufweist.

14. Behälter nach mindestens einem der vorstehenden Ansprüche,
**dadurch gekennzeichnet, dass** die Seitenwand (6), welche gegenüberliegend zur Öffnung (8) angeordnet ist, vorzugsweise an ihrer Außenseite, einen Steuerschrank (54) mit einem Elektroanschluss und/oder zwei Akkumulatoren zur Stromversorgung der Winde (38) aufweist.

15. Behälter nach mindestens einem der vorstehenden Ansprüche,
**dadurch gekennzeichnet, dass** die Anzahl von Anschlüssen einen, vorzugsweise mindestens zwei Anschlüsse (18, 18') mit einer Schlauchkupplung zum Anschluss von Saug- und/oder Druckschläuchen umfasst, vorzugsweise Storz-Kupplungen, welche als Abgang vorzugsweise mit einem Absperrhahn (56) ausgebildet sind und in der Seitenwand (6), welche gegenüberliegend zur Öffnung (8) angeordnet ist, und/oder der Klappe (12) angeordnet sind.

16. Behälter nach mindestens einem der vorstehenden Ansprüche,
**dadurch gekennzeichnet, dass** die Anzahl von Anschlüssen einen, vorzugsweise mindestens zwei Anschlüsse (16, 16') mit einer Schlauchkupplung zum Anschluss von Saug- und/oder Druckschläuchen umfasst, vorzugsweise Storz-Kupplungen, welche zum Einleiten des Kühl- bzw. Löschmittels ausgebildet und zum Behälterboden (2) in einem Abstand von mehr als 0,5 m, vorzugsweise in einem Bereich von 0,8 m bis 1,2 m, besonders bevorzugt von 1 m an der Seitenwand (6) angeordnet sind, welche gegenüberliegend zur Öffnung (8) angeordnet ist.

17. Behälter nach mindestens einem der vorstehenden Ansprüche,
**dadurch gekennzeichnet, dass** an einer der Seitenwände (4, 4', 6) eine Kamera, vorzugsweise eine IR-Kamera, und/oder ein oder mehrere den Aufnahmebereich (10) ausleuchtende Leuchtmittel (46, 46') angeordnet sind.

18. Transportfahrzeug, insbesondere Wechsellader-Fahrzeug, mit
- einem Fahrgestell und einer Ladefläche, und
- einer Wechsellader-Einrichtung zum Aufnehmen eines Behälters (1) auf der Ladefläche und Absetzen des Behälters (1),
**dadurch gekennzeichnet, dass** der Behälter (1) nach einem der Ansprüche 1 bis 17 ausgebildet ist.

19. Verfahren zum Bergen eines havarierten Fahrzeuges unter Verwendung eines Behälters (1) nach einem der Ansprüche 1 bis 17, mit den Schritten:
- Absetzen eines Behälters (1) von einer Ladefläche eines Transportfahrzeuges an einem Einsatzort,
- Zugänglichmachen eines Aufnahmebereiches (10) des Behälters (1), wobei vorzugsweise das Zugänglichmachen des Aufnahmebereiches (10) das Öffnen einer Klappe (12) an der hinteren Stirnseite (6) des Behälters (1) beinhaltet; ;
- Verbringen des havarierten Fahrzeugs (7) in den Aufnahmebereich (10) des Behälters (1);
wobei vorzugsweise das Verbringen des Fahrzeuges das Ziehen des Fahrzeuges mittels einer am Behälter (1) angeordneten Winde (38) in den Aufnahmebereich (10) umfasst;
- wobei weiter vorzugsweise der Schritt des Verbringens, das Umlegen eines Zurrgurtes (37) um das Fahrzeug (7) und das Koppeln des vorzugsweise zu einer Schlaufe ausgebildeten Zurrgurtes (37) mit dem Seilende der Winde (38) umfasst;
- Verschließen des Aufnahmebereiches (10) und Einfüllen von Kühl- bzw. Löschmittel, insbesondere Löschwasser, in den Aufnahmebereich (10).

20. Verfahren nach Anspruch 19, umfassend einen, mehrere oder sämtliche der nachfolgend aufgeführten Schritte:
- Absetzen des Behälters (1) mittels einer Wechsellader- oder Kran-Einrichtung am Transportfahrzeug;
- Schließen der Klappe (12) durch Verschwenken der Klappe (12) um eine horizontale Schwenkachse (14) in eine abdichtende Schließstellung am Behälter (1);
- Einfüllen des Kühl- bzw. Löschmittels bis zu einem vorbestimmten Füllstand im Aufnahmebereich (10) über vorzugsweise an einer Stirnseite (6) des Behälters (1) angeordnete Löschmittel-Anschlüsse (16, 16', 18, 18');
- Entleeren des Aufnahmebereichs (10) durch vorzugsweises Überleiten des Kühl- bzw. Löschmittels in einen mobilen Tank;
- Sichern des Fahrzeuges (7) nach dem Bergen innerhalb des Aufnahmebereiches; und/oder
- Aufnehmen des Behälters (1) zusammen mit dem im Aufnahmebereich (10) befindlichen Fahrzeug (7) durch ein Transportfahrzeug.

21. Verwendung eines Behälters, insbesondere nach einem der Ansprüche 1 bis 17, zum Bergen, insbesondere zum Kühlen bzw. Löschen eines havarierten ElektroFahrzeugs.

22. Verwendung eines Behälters, insbesondere nach einem der Ansprüche 1 bis 17, zum Bergen, insbesondere zum Kühlen bzw. Löschen eines havarierten Fahrzeugs mit Verbrennungsmotor.

## Claims

1. A container, in particular a roll-off container, skip container or ISO container, for recovering damaged vehicles, in particular damaged electric vehicles, having
a container bottom (2) and a plurality of lateral walls (4, 4', 6), these defining a receiving region (10) for the vehicle (7),
a closable opening (8) for transferring the vehicle into or from the receiving region (10),
a winch (38) arranged at the container (1), in particular a cable winch, for bringing the vehicle into the container (1), **characterised by**
a number of connections, arranged at the container (1), for the introduction (42, 42') and/or carrying away (18, 18') of cooling and/or fire extinguishing agent into or from the receiving region.

2. A container according to claim 1,
**characterised in that** the winch (38) is arranged in the receiving region (10) and at a distance of at least 1.2 meters from the container bottom (2).

3. A container according to claim 1 or 2,
**characterised in that** deflection means (40) is arranged between the winch (38) and the container bottom (2).

4. A container according to any one of the preceding claims,
**characterised in that** a lashing strap (37) is coupled with the end of a pulling means (41) of the winch (38), in particular the end of the winch cable, which lashing strap (37) is preferably adjustable in length and is adapted to be passed around the damaged vehicle (7).

5. A container according to any one of the preceding claims,
**characterised by** a roof (20) extending, opposite the container bottom, along at least a portion of the lateral walls (4, 4'), wherein the roof (20) is preferably a fixed roof portion or a sliding roof, preferably a folding roof.

6. A container according to at least one of the preceding claims,
**characterised in that** a flap (12) is associated with the opening (8) and is pivotably mounted on the container (1) about a horizontal pivot axis (14), wherein preferably a pivotable gap cover plate (23) is arranged at the flap (12).

7. A container according to claim 6,
**characterised in that** the flap (12) has a plurality of holding parts (36) projecting from the flap plane, which holding parts externally engage around the lateral walls (4, 4') on both sides of the opening (8) and/or
**in that** one or a plurality of closing aids (26) for the flap (12) are arranged at the container (1), which aids preferably have a spring mechanism (28) acting upon the flap (12) via a traction cable (30).

8. A container according to at least one of the preceding claims,
**characterised in that** a guide device for the vehicle (7) to be transferred into the receiving region (10) is associated with the opening (8), which guide device preferably has two lateral guide plates or crash barriers.

9. A container according to at least one of the preceding claims,
**characterised by** at least one device (70) for load securing of the damaged vehicle (7) in the receiving region (10) of the container.

10. A container according to claim 9,
**characterised in that** the device (70) for load securing has at least one tension means (72) preferably tensionable transversely to the longitudinal axis of the container (1), preferably a tie down strap, and a tension device (74), in particular a ratchet tensioner, which corresponds with the tension means (72).

11. A container according to at least one of the preceding claims,
**characterised in that** the container bottom (2) of the receiving region (10) and/or the lateral walls (4, 4', 6) laterally bounding the receiving region have one or a plurality of lashing eyes.

12. A container according to at least one of the preceding claims,
**characterised in that** the container has external dimensions in a range from approximately 5.9 m x 2.4 m x 1.7 m to 6.9 m x 2.6 m x 2.6 m.

13. A container according to at least one of the preceding claims,
**characterised in that** the container (1) has external dimensions of approximately 5.9 x 2.6 x 1.7 m and internal dimensions of approximately 5.5 x 2.3 x 1.5 m and/or the container surface has a corrosion-resistant coating.

14. A container according to at least one of the preceding claims,
**characterised in that** the lateral wall (6) arranged opposite the opening (8) has, preferably at its exterior, a control cabinet (54) with an electrical connection and/or two rechargeable batteries to supply current to the winch (38).

15. A container according to at least one of the preceding claims,
**characterised in that** the number of connections comprises one, preferably at least two, connections (18, 18') equipped with a hose coupling for the connection of suction and/or pressure hoses, preferably Storz couplings, which as an outflow preferably have a shut-off member (56) and are arranged in the lateral wall (6), facing the opening (8), and/or in the flap (12).

16. A container according to at least one of the preceding claims,
**characterised in that** the number of connections comprises one, preferably at least two, connections (16, 16') with a hose coupling for the connection of suction and/or pressure hoses, preferably Storz couplings, which are for the introduction of the cooling and/or fire extinguishing agent and which are arranged at the lateral wall (6), facing the opening (8), so as to be at a distance of more than 0.5 m, preferably in a range from 0.8 m to 1.2 m, particularly preferably at a distance of approximately one metre, from the container bottom (2).

17. A container according to at least one of the preceding claims,
**characterised in that** at one of the lateral walls (4, 4', 6) there is arranged a camera, preferably an IR camera, and/or one or a plurality of lighting means (46, 46') illuminating the receiving region (10).

18. A transport vehicle, in particular a swap body vehicle, having
- a chassis and a load bed, and
- a swap body device for receiving a container (1) on the load bed and depositing the container (1),
**characterised in that** the container (1) is according to any one of claims 1 to 17.

19. A method of recovering a damaged vehicle using a container (1) according to any one of claims 1 to 17, having the steps:
- depositing of a container (1) at an operation site from a load bed of a transport vehicle,
- making accessible of a receiving region (10) of the container (1), wherein preferably the making accessible of the receiving region (10) includes the opening of a flap (12) at the rear end face (6) of the container (1);
- bringing of the damaged vehicle (7) into the receiving region (10) of the container (1);
wherein preferably the bringing of the vehicle comprises the pulling of the vehicle into the receiving region (10) by means of a winch (38) arranged at the container (1);
- wherein furthermore the bringing step preferably comprises the placing of a lashing strap (37) around the vehicle (7) and the coupling of the lashing strap (37), preferably formed into a loop, with the cable end of the winch (38);
- closure of the receiving region (10) and pouring of cooling and/or fire extinguishing agent, in particular fire-fighting water, into the receiving region (10).

20. A method according to claim 19, comprising one, a plurality or all of the following specified steps:
- depositing of the container (1) on the transport vehicle by means of a swap body device or crane device;
- closing of the flap (12) by pivoting of the flap (12) about a horizontal pivot axis (14) into a sealing closing position at the container (1);
- pouring of the cooling and/or fire extinguishing agent up to a predetermined filling level in the receiving region (10) via fire extinguishing agent connections (16, 16', 18,18') preferably arranged at an end face (6) of the container (1);
- emptying of the receiving region (10) by preferably transferring the cooling and/or extinguishing agent into a mobile tank;
- securing of the vehicle (7) within the receiving region after recovery, and/or
- receiving of the container (1) together with the vehicle (7) located in the receiving region (10) by a transport vehicle.

21. Use of a container, in particular according to any one of claims 1 to 17, for recovery, in particular for cooling and/or fire extinguishing in the case of a damaged vehicle.

22. Use of a container, in particular according to any one of claims 1 to 17, for recovery, in particular for cooling and/or fire extinguishing in the case of a damaged vehicle with an internal combustion motor.

## Revendications

1. Récipient, en particulier benne déposable, benne de dépôt ou conteneur ISO, pour la récupération de véhicules en perdition, en particulier de véhicules électriques en perdition, avec
un fond de récipient (2) et plusieurs parois latérales (4, 4', 6), qui définissent une zone de réception (10) pour le véhicule (7),
une ouverture pouvant être fermée (8) pour le transfert du véhicule dans ou hors de la zone de réception (10),
un treuil (38) agencé au niveau du récipient (1), en particulier treuil à câble, pour faire passer le véhicule dans le récipient (1), et **caractérisé par**
un nombre de raccords agencés au niveau du récipient (1) pour l'introduction (42, 42') et/ou l'évacuation (18, 18') d'agent de refroidissement ou d'extinction dans la zone de réception.

2. Récipient selon la revendication 1,
**caractérisé en ce que** le treuil (38) est agencé dans la zone de réception (10) et par rapport au fond de récipient (2) à une distance d'au moins 1,2 m.

3. Récipient selon la revendication 1 ou 2,
**caractérisé en ce qu'**un renvoi (40) est agencé entre le treuil (38) et le fond de récipient (2).

4. Récipient selon l'une quelconque des revendications précédentes,
**caractérisé en ce qu'**une sangle d'amarrage (37), qui est de préférence réglable en longueur, et qui est adaptée pour être guidée autour du véhicule (7) en perdition, est couplée avec l'extrémité d'un moyen de traction (41) du treuil (38), en particulier l'extrémité du treuil à câble.

5. Récipient selon l'une quelconque des revendications précédentes,
**caractérisé par** un toit (20) s'étendant par rapport au fond de récipient le long d'au moins une section des parois latérales (4, 4'), dans lequel le toit (20) est réalisé de préférence en tant que section de toit fixe ou en tant que toit coulissant, de préférence en tant que toit pliant.

6. Récipient selon l'une quelconque des revendications précédentes,
**caractérisé en ce qu'**un clapet (12), lequel est logé de manière pivotante autour d'un axe de pivotement horizontal (14) au niveau du récipient (1), est associé à l'ouverture (8),
dans lequel une tôle de recouvrement de fente pivotante (23) est agencée de préférence au niveau du clapet (12).

7. Récipient selon la revendication 6,
**caractérisé en ce que** le clapet (12) présente plusieurs éléments de retenue (36) faisant saillie du plan de clapet, lesquels entourent côté extérieur les parois latérales (4, 4') des deux côtés de l'ouverture (8) et/ou
qu'un ou plusieurs auxiliaires de fermeture (26) pour le clapet (12), lesquels présentent de préférence un mécanisme à ressort (28) venant en prise au niveau du clapet (12) par le biais de câbles de traction (30), sont agencés au niveau du récipient (1).

8. Récipient selon au moins une des revendications précédentes,
**caractérisé en ce qu'**un dispositif de guidage pour le véhicule (7) à transférer dans la zone de réception (10), lequel présente de préférence deux tôles conductrices ou glissières latérales, est associé à l'ouverture (8).

9. Récipient selon au moins une des revendications précédentes,
**caractérisé par** au moins un dispositif (70) pour la sécurisation du chargement du véhicule (7) en perdition dans la zone de réception (10) du récipient.

10. Récipient selon la revendication 9,
**caractérisé en ce que** le dispositif (70) pour la sécurisation du chargement présente au moins un moyen de serrage (72) pouvant être serré de préférence transversalement à l'axe longitudinal du récipient (1), de préférence une sangle de serrage, et un dispositif de serrage (74) correspondant au moyen de serrage (72), en particulier un tendeur à cliquet.

11. Récipient selon au moins une des revendications précédentes,
**caractérisé en ce que** le fond de récipient (2) de la zone de réception (10) et/ou les parois latérales (4, 4', 6) délimitant latéralement la zone de réception présentent un ou plusieurs oeillets d'amarrage.

12. Récipient selon au moins une des revendications précédentes,
**caractérisé en ce que** le récipient présente des dimensions extérieures dans une plage d'environ 5,9 m x 2,4 m x 1,7 m à 6,9 m x 2,6 m x 2,6 m.

13. Récipient selon au moins une des revendications précédentes,
**caractérisé en ce que** le récipient (1) présente des dimensions extérieures d'environ 5,9 x 2,6 x 1,7 m et des dimensions intérieures d'environ 5,5 x 2,3 x 1,5 m et/ou la surface de récipient présente un revêtement résistant à la corrosion.

14. Récipient selon au moins une des revendications précédentes,
**caractérisé en ce que** la paroi latérale (6), laquelle est agencée en face de l'ouverture (8), présente de préférence sur son côté extérieur, une armoire de commande (54) avec un raccord électrique et/ou deux accumulateurs pour l'alimentation électrique du treuil (38).

15. Récipient selon au moins une des revendications précédentes,
**caractérisé en ce que** le nombre de raccords comprend un, de préférence au moins deux raccords (18, 18') avec un couplage de tuyau pour le raccordement de tuyaux d'aspiration et/ou de pression, de préférence des couplages Storz, lesquels sont réalisés en tant que départ de préférence avec un robinet d'arrêt (56) et sont agencés dans la paroi latérale (6), laquelle est agencée en face de l'ouverture (8), et/ou le clapet (12).

16. Récipient selon au moins une des revendications précédentes,
**caractérisé en ce que** le nombre de raccords comprend un, de préférence au moins deux raccords (16, 16') avec un couplage de tuyau pour le raccordement de tuyaux d'aspiration et/ou de pression, de préférence des couplages Storz, lesquels sont réalisés pour l'introduction de l'agent de refroidissement ou d'extinction et sont agencés par rapport au fond de récipient (2) à une distance de plus de 0,5 m, de préférence dans une plage de 0,8 m à 1,2 m, de manière particulièrement préférée de 1 m au niveau de la paroi latérale (6), laquelle est agencée en face de l'ouverture (8).

17. Récipient selon au moins une des revendications précédentes,
**caractérisé en ce qu'**une caméra, de préférence une caméra IR, et/ou un ou plusieurs moyens d'éclairage (46, 46') éclairant la zone de réception (10) sont agencés au niveau d'une des parois latérales (4, 4', 6).

18. Véhicule de transport, en particulier véhicule porte-cellule, avec
- un châssis et une surface de chargement, et
- un dispositif porte-cellule pour la réception d'un récipient (1) sur la surface de chargement et le dépôt du récipient (1),
**caractérisé en ce que** le récipient (1) est réalisé selon l'une quelconque des revendications 1 à 17.

19. Procédé de récupération d'un véhicule en perdition en utilisant un récipient (1) selon l'une quelconque des revendications 1 à 17, avec les étapes de :
- dépôt d'un récipient (1) d'une surface de chargement d'un véhicule de transport sur un lieu d'intervention,
- mise à disposition d'un accès d'une zone de réception (10) du récipient (1), dans lequel de préférence la mise à disposition d'un accès de la zone de réception (10) contient l'ouverture d'un clapet (12) au niveau du côté frontal arrière (6) du récipient (1) ;
- passage du véhicule (7) en perdition dans la zone de réception (10) du récipient (1) ;
dans lequel de préférence le passage du véhicule comprend la traction du véhicule au moyen d'un treuil (38) agencé au niveau du récipient (1) dans la zone de réception (10) ;
- dans lequel de manière davantage préférée l'étape de passage comprend la pose d'une sangle d'amarrage (37) autour du véhicule (7) et le couplage de la sangle d'amarrage (37) réalisée de préférence en une boucle avec l'extrémité de câble du treuil (38) ;
- fermeture de la zone de réception (10) et introduction d'agent de refroidissement ou d'extinction, en particulier d'eau d'extinction, dans la zone de réception (10).

20. Procédé selon la revendication 19, comprenant une, plusieurs ou toutes les étapes énumérées ci-après :
- dépôt du récipient (1) au moyen d'un dispositif porte-cellule ou de grue au niveau du véhicule de transport ;
- fermeture du clapet (12) par pivotement du clapet (12) autour d'un axe de pivotement horizontal (14) dans une position de fermeture d'étanchéité au niveau du récipient (1) ;
- remplissage de l'agent de refroidissement ou d'extinction jusqu'à un niveau de remplissage prédéfini dans la zone de réception (10) par le biais de raccords d'agent d'extinction (16, 16', 18, 18') agencés de préférence au niveau d'un côté frontal (6) du récipient (1) ;
- vidage de la zone de réception (10) par de préférence transfert de l'agent de refroidissement ou d'extinction dans un réservoir mobile ;
- sécurisation du véhicule (7) après la récupération à l'intérieur de la zone de réception ; et/ou
- réception du récipient (1) conjointement avec le véhicule (7) se trouvant dans la zone de réception (10) par un véhicule de transport.

21. Utilisation d'un récipient, en particulier selon l'une quelconque des revendications 1 à 17, pour la récupération, en particulier pour le refroidissement ou l'extinction d'un véhicule électrique en perdition.

22. Utilisation d'un récipient, en particulier selon l'une quelconque des revendications 1 à 17, pour la récupération, en particulier pour le refroidissement ou l'extinction d'un véhicule en perdition à moteur à combustion interne.
